(19) Europäisches Patentamt
European Patent Office
Office européen des brevets

(11) **EP 4 031 331 B1**

(12) **EUROPÄISCHE PATENTSCHRIFT**

(45) Veröffentlichungstag und Bekanntmachung des Hinweises auf die Patenterteilung:
**09.08.2023   Patentblatt 2023/32**

(21) Anmeldenummer: **20709579.5**

(22) Anmeldetag: **09.03.2020**

(51) Internationale Patentklassifikation (IPC):
**B25F 5/00** (2006.01)

(52) Gemeinsame Patentklassifikation (CPC):
**B25F 5/00**

(86) Internationale Anmeldenummer:
**PCT/EP2020/056159**

(87) Internationale Veröffentlichungsnummer:
**WO 2021/052634 (25.03.2021 Gazette 2021/12)**

(54) **VERFAHREN ZUM BETREIBEN EINER HANDGEFÜHRTEN WERKZEUGMASCHINE UND HANDWERKZEUGMASCHINE**

METHOD FOR OPERATING A HAND-HELD POWER TOOL, AND HAND-HELD POWER TOOL

PROCÉDÉ POUR FAIRE FONCTIONNER UNE MACHINE-OUTIL À GUIDAGE MANUEL ET MACHINE-OUTIL PORTATIVE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **20.09.2019   EP 19198570**

(43) Veröffentlichungstag der Anmeldung:
**27.07.2022   Patentblatt 2022/30**

(73) Patentinhaber: **Hilti Aktiengesellschaft**
**9494 Schaan (LI)**

(72) Erfinder:
• **SCHAER, Roland**
**9472 Grabs (CH)**
• **WIERER, Michael**
**6832 Röthis (AT)**
• **KNOBEL, Manuel**
**6713 Ludesch (AT)**

(74) Vertreter: **Hilti Aktiengesellschaft**
**Corporate Intellectual Property**
**Feldkircherstrasse 100**
**Postfach 333**
**9494 Schaan (LI)**

(56) Entgegenhaltungen:
**EP-A2- 0 771 619        DE-A1- 4 344 817**
**DE-A1-102013 200 602**

**Beschreibung**

Die vorliegende Erfindung betrifft ein Verfahren zum Betreiben einer handgeführten Werkzeugmaschine, beispielsweise einer Schleif- und/oder Trennmaschine, insbesondere eines Winkelschleifers, einer Kreis-, Stich- oder Säbelsägemaschine, Bohrmaschine, Bohrhammer, Meißelhammer oder dergleichen, wobei die handgeführte Werkzeugmaschine mit einem beispielsweise drehend oder linear oder dergleichen bewegten Werkzeug, beispielsweise einer Trennscheibe, einem Sägeblatt oder dergleichen, verbindbar ist und einen Antrieb zum Antreiben des Werkzeugs, eine Steuerungsvorrichtung sowie wenigstens einen Sensor zum Erfassen von Linearbeschleunigungswerten und Drehwinkelgeschwindigkeitswerten enthält.

Des Weiteren betrifft die vorliegende Erfindung eine Handwerkzeugmaschine zur Durchführung des Verfahrens.

Bei Handwerkzeugmaschinen bzw. handgeführten Werkzeugmaschinen, beispielsweise Winkelschleifern, Sägemaschinen oder dergleichen besteht die Gefahr, dass das von der Handwerkzeugmaschine angetriebene Werkzeug, beispielsweise eine Trennscheibe eines Winkelschleifers oder eines Sägeblatts einer Sägemaschine, während der Bearbeitung eines Werkstoffs, wie beispielsweise Beton, schlagartig verklemmt. Also Folge hiervon kann es passieren, dass die Handwerkzeugmaschine unkontrollierte und sehr schnelle Bewegungen ausführt, die zu einer Verletzung des Benutzers führen kann.

Aus der EP 0 771 619 A2 ist ein Verfahren zum Unterbrechen der Antriebstätigkeit einer Handwerkzeugmaschine bekannt, bei dem eine Sicherheitsabschaltung nur dann erfolgt, wenn der Wert wenigstens zweier die räumliche Bewegung der Handwerkzeugmaschine als Ganzes kennzeichnender Bewegungsgrössen einen bestimmten Schwellwert überschreitet. Zur Erfassung der Bewegungsgrösse ist ein Bewegungssensor vorgesehen, dessen Beschleunigungssignal in Integratoren in entsprechende Weg- und Geschwindigkeitssignale überführt wird, welche in einer Vergleichseinrichtung mit vorgegebenen Schwellwerten verglichen werden. Im Anschluss an die Vergleichseinrichtung ist ein Operator vorgesehen, der ein Auslösen des Aktors nur nach Erreichen oder Überschreiten beider Schwellwerte auslöst. Dieses Dokument offenbart:

Verfahren zum Betreiben einer handgeführten Werkzeugmaschine, die mit einem Werkzeug verbindbar ist, wobei ein Antrieb zum Antreiben des Werkzeugs, eine Steuerungsvorrichtung und wenigstens eine Sensoreinrichtung vorgesehen sind, wobei die Sensoreinrichtung zum Erfassen wenigstens eines Linearbeschleunigungswertes und insbesondere wenigstens eines Drehratenwertes ausgeführt ist, wobei die wenigstens eine Sensoreinrichtung einen Abstand zu einem der Werkzeugmaschine oder dem Werkzeug zugeordneten Referenzpunkt größer oder gleich Null aufweist.

Dieses Dokument offenbart ferner die Schritte:

- Erfassen wenigstens eines Linearbeschleunigungswertes durch die wenigstens eine Sensoreinrichtung;
- Integrieren des Linearbeschleunigungswertes zu wenigstens einem Geschwindigkeitswert;
- Integrieren des wenigstens einen Geschwindigkeitswerts zu wenigstens einem Distanzwert;
- Filtern wenigstens eines der Linearbeschleunigungswerte und/oder wenigstens eines der Geschwindigkeitswerte;
- Vergleichen des wenigstens einen Distanzwertes mit einem vordefinierten Grenzwert; und
- Einleiten einer vordefinierten Aktion, wenn der wenigstens eine Distanzwert den definierte Grenzwert übersteigt.

Ein weiteres Verfahren zur Vermeidung von Unfällen ist aus der DE 43 44 817 A1 bekannt.

Es ist daher Aufgabe der vorliegenden Erfindung, ein Verfahren zum Betreiben einer handgeführten Werkzeugmaschine zu schaffen, mit dem eine schnelle Bewegung der handgeführten Werkzeugmaschine sicher erkannt wird und die Gefahr einer Verletzung für einen Anwender der Handwerkzeugmaschine sowie einer Beschädigung der Handwerkzeugmaschine vermindert werden kann. Darüber hinaus ist es Aufgabe der vorliegenden Erfindung, eine Handwerkzeugmaschine zur Durchführung des Verfahrens zu schaffen.

Die Aufgabe wird gelöst durch den Gegenstand des unabhängigen Anspruchs 1 sowie durch den Gegenstand des unabhängigen Anspruchs 10. Vorteilhafte Ausführungsformen zu den Gegenständen der unabhängigen Ansprüche 1 und 10 finden sich in den abhängigen Unteransprüchen.

Die Aufgabe wird hierbei gelöst durch ein Verfahren zum Betreiben einer handgeführten Werkzeugmaschine, die mit einem Werkzeug verbindbar ist, wobei ein Antrieb zum Antreiben des Werkzeugs, eine Steuerungsvorrichtung und wenigstens eine Sensoreinrichtung vorgesehen sind, wobei die Sensoreinrichtung zum Erfassen wenigstens eines Linearbeschleunigungswertes und insbesondere wenigstens eines Drehwinkelgeschwindigkeitswertes ausgeführt ist, wobei die wenigstens eine Sensoreinrichtung einen Abstand zu einem der Werkzeugmaschine oder dem Werkzeug zugeordneten Referenzpunkt größer oder gleich Null aufweist. Erfindungsgemäß enthält das Verfahren die folgenden Verfahrensschritte:

- Erfassen wenigstens eines Linearbeschleunigungswertes durch die wenigstens eine Sensoreinrichtung;
- Subtrahieren der Erdbeschleunigung von dem wenigstens einen Linearbeschleunigungswert zu wenigstens einem bereinigten Linearbeschleunigungswert;
- Integrieren des wenigstens einen bereinigten Linearbeschleunigungswertes zu wenigstens einem Geschwindigkeitswert;
- Integrieren des wenigstens einen Geschwindigkeitswerts zu wenigstens einem Distanzwert;
- Multiplizieren des wenigstens einen Geschwindigkeitswertes mit einer Zeitkonstanten zu wenigstens einem weiteren Distanzwert;
- Addieren des wenigstens einen Distanzwerts mit dem wenigstens einen weiteren Distanzwert zu wenigstens einem Gesamtdistanzwert;
- Filtern wenigstens eines der Linearbeschleunigungswerte und/oder wenigstens eines der Geschwindigkeitswerte;
- Vergleichen des wenigstens einen Gesamtdistanzwertes mit einem definierten Grenzwert;
- Einleiten einer vordefinierten Aktion, wenn der wenigstens eine Gesamtdistanzwert den definierte Grenzwert übersteigt.

Mit dem erfindungsgemäßen Verfahren kann auf einfache und sichere Weise eine schnelle Bewegung des Referenzpunkts der handgeführten Werkzeugmaschine ermittelt werden, die beispielsweise dadurch erzeugt wird, dass das Werkzeug in einem zu bearbeitenden Werkstück festsitzt oder verklemmt. Durch die sehr schnelle und zeitnahe Einleitung einer entsprechenden vordefinierten Aktion kann ein Anwender auf einfache Weise vor einer Verletzung durch eine plötzliche Beschleunigung der handgeführten Werkzeugmaschine geschützt werden.

Mit dem erfindungsgemäßen Verfahren wird eine Position des Referenzpunktes ausgehend von der aktuellen Position um eine definierte Zeit in die Zukunft berechnet und die vordefinierte Aktion eingeleitet, wenn sich der Referenzpunkt um eine Distanz größer als ein definierter Grenzwert von der aktuellen Position befinden würde. Es wird somit insbesondere ein Algorithmus bereitgestellt, der unter Annahme von über eine bestimmte Zeit konstanten Rahmenbedingungen eine Position des Referenzpunktes berechnet.

Durch das Filtern der Werte ist auf einfache Weise ein ungewolltes Einleiten der vordefinierten Aktion verhinderbar, so dass beispielsweise im Betrieb der handgeführten Werkzeugmaschine auftretende Vibrationen nicht zur Einleitung der vordefinierten Aktion führt.

Die Sensoreinrichtung weist beispielsweise einen Beschleunigungssensor zur Ermittlung von Linearbeschleunigungswerten und/oder einen Gyrosensor zur Ermittlung von Drehratenwerten auf, wobei die eine oder die beiden Sensoreinrichtungen insbesondere direkt im Referenzpunkt angeordnet sein können. Alternativ hierzu kann es auch vorgesehen sein, dass wenigstens eine Sensoreinrichtung und beispielsweise beide Sensoreinrichtungen beabstandet zu dem Referenzpunkt angeordnet sind. Es kann eine einzige Sensoreinrichtung vorgesehen sein, die die Funktionalität eines Beschleunigungssensors und eines Gyrosensors in sich vereint.

Der Referenzpunkt kann beliebig gewählt werden, wobei es sich insbesondere anbietet diesen im Bereich einer Arbeitsachse oder einem Arbeitspunkt der Werkzeugmaschine oder in einem Griffbereich der Werkzeugmaschine anzuordnen.

Bei einer vorteilhaften Ausführungsform der vorliegenden Erfindung wird wenigstens ein Drehratenwert von wenigstens einer Sensoreinrichtung ermittelt, wobei der Drehratenwert mit einem Wert multipliziert wird, der dem Abstand der Sensoreinrichtung von dem Referenzpunkt entspricht, wobei der ermittelte Wert zur Ermittlung des Gesamtdistanzwertes verwendet wird und insbesondere zu dem aus den Linearbeschleunigungswerten generierten Geschwindigkeitswerten addiert wird. Auf diese Weise kann eine gesamte Bewegung eines Referenzpunktes in einer Raumrichtung auch dann genau ermittelt werden, wenn die Sensoreinrichtung beabstandet zu dem Referenzpunkt angeordnet ist, da hierbei auch eine Verdrehung der Werkzeugmaschine einen Einfluss auf die Bewegung des Referenzpunktes hat.

Um ein Bewegung der handgeführten Werkzeugmaschine nicht nur in einer Raumrichtung, sondern auch in zwei und besonders vorteilhaft in drei Raumrichtungen ermitteln zu können, werden von der wenigstens einen Sensoreinrichtung Linearbeschleunigungswerte und/oder Drehratenwerte in wenigstens zwei, insbesondere drei Raumrichtungen ermittelt. Hierdurch kann auf einfache Weise eine Bewegung der handgeführten Werkzeugmaschine im Raum überwacht werden.

Um auf einfache Weise die Erdbeschleunigung von dem wenigstens einen Linearbeschleunigungswert zu wenigstens einem bereinigten Linearbeschleunigungswert subtrahieren zu können, wird bei einer vorteilhaften Ausführungsform der vorliegenden Erfindung ein Ruhezustand der Werkzeugmaschine im Raum ermittelt, wenn eine Vektorsumme der drei Linearbeschleunigungswerte innerhalb eines definierten Bereiches von beispielsweise 8 m/s$^2$ bis 12 m/s$^2$ liegt. Um eine Rechenleistung zu reduzieren, kann alternativ hierzu ein Skalarprodukt der Linearbeschleunigungswerte verwendet werden.

Alternativ oder zusätzlich hierzu kann ein Ruhezustand der handgeführten Werkzeugmaschine anhand der drei Drehratenwerte ermittelt werden, wobei ein Ruhezustand beispielsweise ermittelt wird, wenn ein Skalarprodukt der drei Drehratenwerte kleiner als ein definierter Grenzwert von beispielsweise 4000 rad$^2$/s$^2$, insbesondere kleiner als etwa

2000 rad$^2$/s$^2$ ist.

Insbesondere ist es vorgesehen, dass ein Ruhezustand der handgeführten Werkzeugmaschine ermittelt wird, wenn dies sowohl anhand der Beschleunigungswerte als auch anhand der Drehratenwerte ermittelt wird. Alternativ hierzu kann ein Bewegungszustand der handgeführten Werkzeugmaschine, also ein Zustand der handgeführten Werkzeugmaschine nicht im Ruhezustand, ermittelt werden, wenn entweder die Linearbeschleunigungswerte oder die Drehratenwerte keinen Ruhezustand ermitteln.

Bei einer vorteilhaften Ausführungsform eines Verfahrens nach der Erfindung wird eine Lage der Werkzeugmaschine bei in Bewegung befindlicher Werkzeugmaschine, d. h., insbesondere für den Fall, dass anhand der oben beschriebenen Kriterien kein Ruhezustand der Werkzeugmaschine ermittelt wird, anhand einer Addition von integrierten Drehratensignale zu der Lage der Werkzeugmaschine im Ruhezustand ermittelt. Vorzugsweise wird die Lage der Werkzeugmaschine wiederum anhand der Linearbeschleunigungswerte ermittelt, wenn zu einem späteren Zeitpunkt erneut ein Ruhezustand der Werkzeugmaschine ermittelt wird.

Als besonders vorteilhaft zur schnellen Erkennung eines Ausschlagens der Werkzeugmaschine hat es sich herausgestellt, wenn die Zeitkonstante einen Wert zwischen 5 ms und 150 ms, insbesondere von etwa 70 ms aufweist.

Um den Einfluss von im Betrieb der Werkzeugmaschine auftretenden Störeinflüssen auf einfache Weise zu begrenzen oder vorzugsweise vollständig auszuschließen kann wenigstens ein Drehratenwert und/oder wenigstens ein Linearbeschleunigungswert zum Blockieren von Frequenzwerten, die unterhalb eines vorbestimmten Frequenzschwellwertes und/oder oberhalb eines weiteren Frequenzschwellwertes liegen, gefiltert werden. Hierdurch können beispielsweise kleinere Bewegungen der handgeführten Werkzeugmaschine, die kein festsitzendes Werkzeug als Ursache haben, für das Verfahren ignoriert werden.

Bei dem Filter kann es sich um einen Hochpassfilter, einen Tiefpassfilter oder einen bandbegrenzten Filter handelt. Um ein beispielsweise auf Störeinflüsse zurückgehendes unerwünschtes Überschreiten des Grenzwertes sicher zu vermeiden, hat es sich als vorteilhafte erwiesen, wenn ein bandbegrenzter Filter sowohl für die Beschleunigungswerte als auch für die Geschwindigkeitswerte eingesetzt wird, wobei Grenzfrequenzen vorzugsweise jeweils etwa 0,5 Hz und 10 Hz betragen. Das Filtern der Werte kann dabei jeweils vor oder nach einer Zusammenführung der aus den Linearbeschleunigungswerten generierten Geschwindigkeitswerte mit den aus den Drehratenwerten errechneten Geschwindigkeitswerten vorgenommen werden.

Besonders gute Ergebnisse sind erzielbar, wenn ein bandbegrenzter Filter für die Linearbeschleunigungswerte und ein Hochpassfilter für die Drehratenwerte oder ein bandbegrenzter Filter der Geschwindigkeitswerte vor oder nach einer Zusammenführung der Signale verwendet wird.

Ein guter Schutz eines Anwenders bzw. Benutzers vor einer Verletzung ist erzielbar, wenn die vordefinierte Aktion einem Abschalten des Antriebs entspricht. Durch die Unterbrechung des Antriebs kann beispielsweise verhindert werden, dass ein von dem Antrieb erzeugtes Drehmoment auf das Gehäuse und schließlich auf einen Anwender der Handwerkzeugmaschine übertragen wird. Noch sicherer ist die Werkzeugmaschine ausführbar, wenn die vordefinierte Aktion einem aktiven Abbremsen des Antriebs entspricht, so dass das Werkzeug besonders schnell zu einem Stillstand kommt. Durch das aktive Bremsen kann eine mögliche Gefahr für einen Anwender der Werkzeugmaschine weiter reduziert werden. Alternativ oder zusätzlich hierzu kann es auch vorgesehen sein, dass die vordefinierte Aktion einem Aussenden eines Warnsignals und/oder der Ausgabe eines Signals auf einer Anzeigeeinrichtung entspricht.

Des Weiteren wird die Aufgabe gelöst durch eine Handwerkzeugmaschine, die mit einem Werkzeug verbindbar ist, wobei ein Antrieb zum Antreiben des Werkzeugs, eine Steuerungsvorrichtung und wenigstens eine Sensoreinrichtung vorgesehen sind, wobei die Sensoreinrichtung zum Erfassen wenigstens eines Linearbeschleunigungswertes und insbesondere wenigstens eines Drehwinkelgeschwindigkeitswertes ausgeführt ist, wobei die wenigstens eine Sensoreinrichtung einen Abstand zu einem der Werkzeugmaschine oder dem Werkzeug zugeordneten Referenzpunkt größer oder gleich Null aufweist, und wobei die Handwerkzeugmaschine zur Durchführung des oben näher beschriebenen Verfahrens ausgeführt ist.

Die zum erfindungsgemäßen Verfahren angeführten Vorteile gelten entsprechend auch für eine erfindungsgemäß ausgeführte Handwerkzeugmaschine. Mit einer erfindungsgemäß ausgeführten Handwerkzeugmaschine ist somit auf einfache und sichere Weise eine Verletzung eines Anwenders verhinderbar.

Um beispielsweise kleinere Bewegungen der Handwerkzeugmaschine, die kein festsitzendes Werkzeug als Ursache haben, oder Störeinflüsse, wie beispielsweise Vibrationen, für das Verfahren ignorieren zu können, kann wenigstens eine Filtereinrichtung zum Blockieren von Frequenzwerten, die unterhalb eines vorbestimmten Frequenzschwellwertes liegen, und/oder wenigstens eine Filtereinrichtung zum Blockieren von Frequenzwerten, die oberhalb eines vorbestimmten Frequenzschwellwertes liegen, vorgesehen sein.

Bei einer besonders einfach ausgeführten Handwerkzeugmaschine nach der Erfindung umfasst die Sensoreinrichtung einen Beschleunigungssensor zur Ermittlung von Linearbeschleunigungswerte insbesondere in drei Raumrichtungen und einen Gyrosensor zur Ermittlung von Drehratenwerten in den drei Raumrichtungen.

Weitere Vorteile ergeben sich aus der folgenden Figurenbeschreibung. In den Figuren sind mehrere Ausführungsbeispiele der vorliegenden Erfindung dargestellt. Die Figuren, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

In den Figuren sind gleiche und gleichartige Komponenten mit gleichen Bezugzeichen beziffert. Es zeigen:

Fig. 1 eine schematische Darstellung einer als Winkelschleifer ausgeführten Handwerkzeugmaschine in einer perspektivischen Ansicht;

Fig. 2 eine schematische Darstellung des Winkelschleifers gemäß Fig. 1 in einer Seitenansicht;

Fig. 3 eine schematische Darstellung des Winkelschleifers gemäß Fig. 1 und Fig. 2 in einer Draufsicht;

Fig. 4 eine vereinfachte Draufsicht einer alternativen Ausführung einer als Winkelschleifer ausgebildeten Handwerkzeugmaschine, wobei von einer Sensoreinrichtung ermittelbare Linearbeschleunigungswerte und Drehratenwerte ersichtlich sind;

Fig. 5 eine weitere vereinfachte Ansicht einer als Winkelschleifer ausgeführten Handwerkzeugmaschine; und

Fig. 6 ein Ablaufdiagramm zur grafischen Darstellung des erfindungsgemäßen Verfahrens.

**Ausführungsbeispiele:**

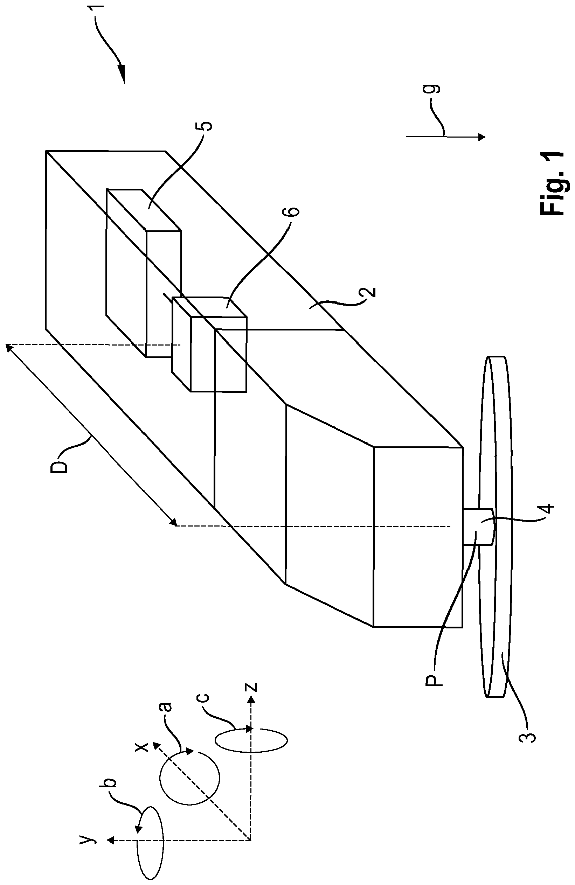

Fig. 1 zeigt eine Handwerkzeugmaschine 1 bzw. eine handgeführte Werkzeugmaschine nach der Erfindung, die in der gezeigten Darstellung als Winkelschleifer ausgeführt ist. Entsprechend einer alternativen Ausgestaltungsform kann die Handwerkzeugmaschine 1 auch als Bohrmaschine, als Bohrhammers, als Meißelhammers, als Sägemaschine, wie beispielsweise einer Kreissäge, einer Stichsäge, einer Säbelsäge oder dergleichen ausgebildet sein.

Die in den Figuren als Winkelschleifer ausgestaltete Handwerkzeugmaschine 1 weist ein Gehäuse 2 und ein beispielsweise als Trennscheibe ausgeführtes Werkzeug 3 auf. Das Gehäuse 2 weist vorzugsweise wenigstens einen Haltebereich auf, an dem ein Anwender die Handwerkzeugmaschine 1 mit einer oder beiden Händen halten und führen kann. Das Werkzeug 3 ist von einem Antrieb betätigbar, der insbesondere über einen mit der Handwerkzeugmaschine 1 verbindbaren Akkumulator mit Strom versorgbar ist. Der Akkumulator ist in den Figuren nicht dargestellt. Gemäß einer alternativen und nicht in den Figuren gezeigte Ausgestaltungsform kann die Handwerkzeugmaschine 1 auch über ein Stromkabel mit elektrischem Strom aus einem Netzwerk versorgt werden. Das Stromkabel ist ebenfalls nicht in den Figuren gezeigt.

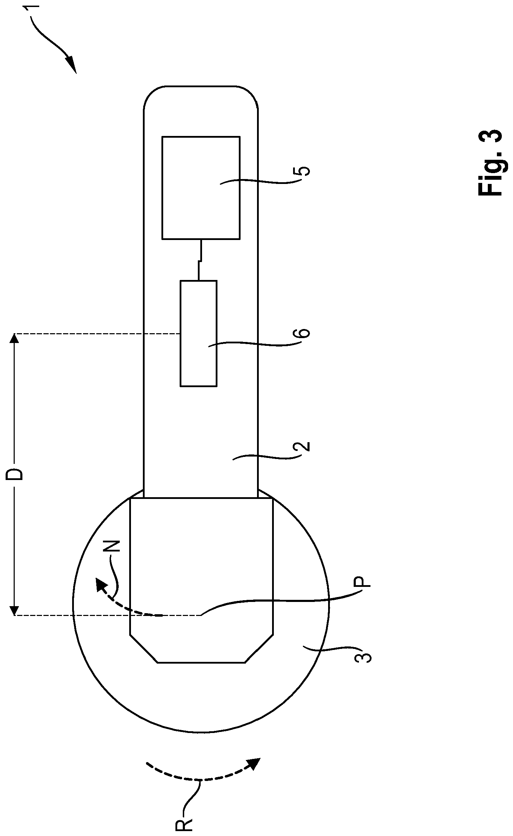

Der Antrieb zur Betätigung des Werkzeugs 3 in einer drehenden, axialen, taumelnden oder dergleichen Bewegung ist ebenso wie ein Getriebe und eine Antriebswelle 4 im Inneren des Gehäuses 2 angeordnet. Der beispielsweise als Elektromotor ausgeführte Antrieb, das Getriebe und die Antriebswelle 4 sind dabei so in dem Gehäuse 2 zueinander angeordnet und miteinander verbunden, dass ein von dem Elektromotor erzeugtes Drehmoment auf das Getriebe und schließlich auf die Antriebswelle 4 übertragen werden kann. Ein sich frei drehendes und nach unten an dem Gehäuse 2 herausragendes Ende der Antriebswelle 4 ist mit der Trennscheibe 3 verbunden. Das Drehmoment der Antriebswelle 4 kann somit auf die Trennscheibe 3 übertragen werden, sodass sich die Trennscheibe 3 - wie in Fig. 3 dargestellt - in Pfeilrichtung R drehen kann. In den Figuren sind der als Elektromotor ausgestaltete Antrieb, das Getriebe sowie der überwiegende Anteil der Antriebswelle 4 nicht dargestellt.

Die Handwerkzeugmaschine 1 weist weiterhin eine Steuerungsvorrichtung 5 sowie eine Sensoreinrichtung 6 auf. Die Sensoreinrichtung 6 ist mit der Steuerungsvorrichtung 5 elektrisch oder alternativ drahtlos, beispielsweise über Funk, verbunden. Signale können zwischen der Sensoreinrichtung 6 und der Steuerungseinrichtung 5 gesendet werden. Die Steuerungsvorrichtung 5 ist wiederum mit dem Elektromotor und dem Akkumulator elektrisch oder alternativ drahtlos, beispielsweise über Funkt, verbunden. Signale können zwischen der Sensoreinrichtung 6 und dem Elektromotor sowie dem Akkumulator gesendet werden. Die Steuerungsvorrichtung 5 dient unter anderem zum Steuern und Regeln des Antriebs sowie der Stromversorgung der Handwerkzeugmaschine 1.

Vorliegend ist eine einzige Sensoreinrichtung 6 vorgesehen. Bei einer alternativen Ausführung können auch verschiedene Sensoreinrichtungen vorgesehen sein. Die Sensoreinrichtung 6 dient vorliegend zum gleichzeitigen Erfassen von sechs individuellen Messwerten. Die Sensoreinrichtung 6 ist vorliegend als kombinierter Beschleunigungs- und/oder Gyro-Sensor ausgeführt. Bei alternativen Ausführungen kann es auch sein, dass nur ein Beschleunigungssensor oder ein separater Beschleunigungssensor und ein Gyro-Sensor vorgesehen sind, wobei die Sensoren bei letzter Ausführung an verschiedenen Orten der Werkzeugmaschine 1 angeordnet sein können.

Die Sensoreinrichtung 6 ist vorliegend zur Erfassung eines ersten Linearbeschleunigungswert $a_x$ in einer Richtung x, eines zweiten Linearbeschleunigungswert $a_y$ in einer Richtung y und eines dritten Linearbeschleunigungswert $a_z$ in einer Richtung z ausgeführt. Des Weiteren ist die Sensoreinrichtung 6 zur Erfassung eines ersten Drehratenwertes

bzw. Drehgeschwindigkeitswertes $\omega_x$ in Drehrichtung a um die Drehachse x, eines zweiten Drehratenwertes bzw. Drehgeschwindigkeitswert $\omega_y$ in Drehrichtung b um die Drehachse y sowie eines dritten Drehratenwertes bzw. Drehgeschwindigkeitswert $\omega_z$ in Drehrichtung c um die Drehachse z ausgeführt.

Für den Fall, dass das als Trennscheibe ausgeführte Werkzeug 3 während der Arbeit mit der Handwerkzeugmaschine 1 in einem zu bearbeitenden Werkstoff, beispielsweise Beton, stecken bleibt und sich daher das Werkzeug 3 nicht mehr relativ zum Werkstoff dreht, wirkt das von dem Elektromotor erzeugte Drehmoment nunmehr auf das Gehäuse 2 der Handwerkzeugmaschine 1. Als Folge dessen beginnt das Gehäuse 2 in Drehrichtung N bzw. gegen die Drehrichtung b zu beschleunigen. Eine derartige und plötzliche Beschleunigung bzw. ein plötzliches Ausbrechen des Gehäuses 2 der Handwerkzeugmaschine 1 kann dabei für einen Anwender gefährlich werden.

Um zu verhindern, dass eine rotierende Scheibe den Benutzer oder andere verletzen kann, schaltet die Steuerungsvorrichtung 5 den Elektromotor schnellstmöglich ab, wenn mit Hilfe der von der Sensoreinrichtung 6 erfassten Werte sowie einem in der Steuerungsvorrichtung 5 hinterlegten Algorithmus, der mit dem erfindungsgemäßen Verfahren beschrieben wird, eine plötzliche Beschleunigung bzw. ein plötzliches Ausbrechen des Gehäuses 2 der Handwerkzeugmaschine 1 detektiert wird.

Als Referenzpunkt P, für den die jeweils vorliegenden Werte ermittelt werden, ist hier eine Drehachse des Werkzeugs 3 definiert. Bei alternativen Ausführungen, auch bei anderen Arten von Handwerkzeugmaschinen können hierzu abweichende Referenzpunkte definiert werden.

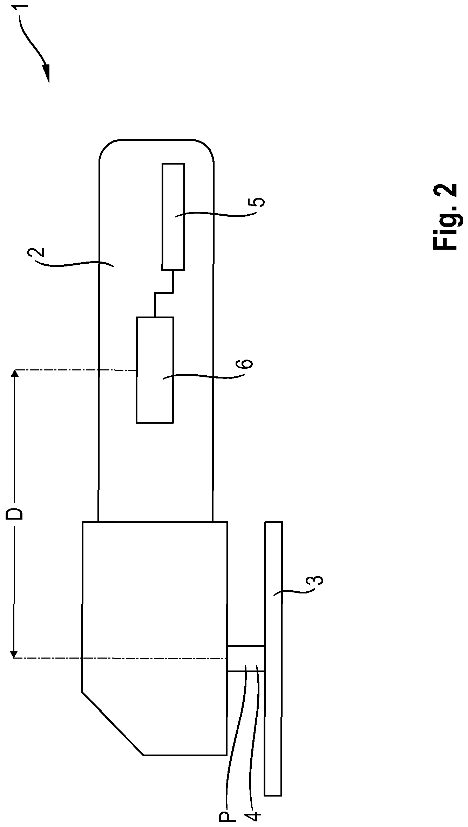

Wie Fig. 1 bis 3 zu entnehmen ist, ist die Sensoreinrichtung 6 vorliegend im Wesentlichen in Längsrichtung x der Handwerkzeugmaschine 1 betrachtet in der Mitte des Gehäuses 2 der Handwerkzeugmaschine 1 positioniert. Der Referenzpunkt P weist somit in Längsrichtung x der Handwerkzeugmaschine 1 vorliegend einen Abstand D bzw. $r_D$ von der Sensoreinrichtung 6 auf.

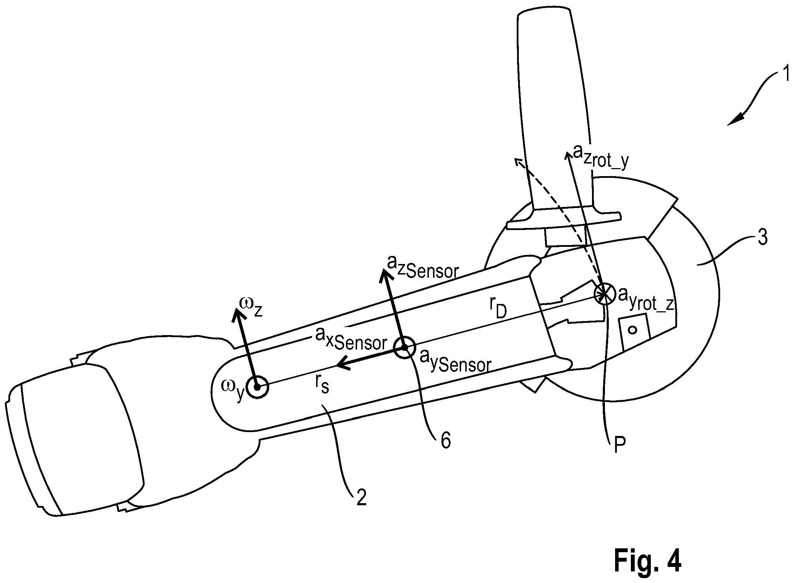

Bei der Ausführung gemäß Fig. 4 ist die Sensoreinrichtung 6 zur Ermittlung der Linearbeschleunigungswerte $a_x$, $a_y$ und $a_z$ mit einem ersten Abstand $r_D$ zu dem Referenzpunkt P und eine weitere Sensoreinrichtung zur Ermittlung der Drehratenwerte $\omega_x$, $\omega_y$ und $\omega_z$ mit einem Abstand $r_D + r_s$ zu dem Referenzpunkt P angeordnet.

Bei einer weiteren alternativen Ausführung der Erfindung kann vorgesehen sein, dass ein Abstand zwischen dem Referenzpunkt P und der Sensoreinrichtung 6 gleich Null ist und die Sensoreinrichtung 6 somit im Referenzpunkt P angeordnet ist.

Im Folgenden wird zunächst ein Verfahren beschrieben, welches bei in dem Referenzpunkt P angeordneter Sensoreinrichtung 6 Anwendung findet.

Die Sensoreinrichtung 6 erfasst einen ersten Linearbeschleunigungswert $a_x$ in einer Richtung x, einen zweiten Linearbeschleunigungswert $a_y$ in einer Richtung y sowie einen dritten Linearbeschleunigungswert $a_z$ in einer Richtung z. Die Richtungen x, y und z stehen dabei jeweils senkrecht aufeinander, wobei die x-Richtung beispielsweise der Längsrichtung der Handwerkzeugmaschine 1, die y-Richtung einer Hochrichtung der Handwerkzeugmaschine 1 und die z-Richtung einer Querrichtung der Handwerkzeugmaschine 1 entspricht.

Das Erfassen des ersten, zweiten und dritten Linearbeschleunigungswertes $a_x$, $a_y$, $a_z$ erfolgt nachdem der Antrieb der Handwerkzeugmaschine 1 aktiviert wurde und ein Drehmoment auf das als Trennscheibe ausgestaltete Werkzeug 3 übertragen wird.

Auf die Handwerkzeugmaschine 1 wirkt dabei permanent die Erdbeschleunigung (g = 9,81 m/s$^2$), die von der Sensoreinrichtung 6 zusätzlich erfasst wird. Da diese für die Ermittlung eines kritischen Zustandes der Handwerkzeugmaschine 1 störend ist, wird die jeweilige Komponente des Erdbeschleunigungswerts g von dem ersten, zweiten und dritten Linearbeschleunigungswert $a_x$, $a_y$, $a_z$ abgezogen und hierdurch ein vierter, fünfter und sechster Beschleunigungswert $a_{xkorr}$, $a_{ykorr}$, $a_{zkorr}$ ermittelt.

Um die Erdbeschleunigung von den Linearbeschleunigungswerten $a_x$, $a_y$, $a_z$ beispielsweise in einer Vektorrechnung subtrahieren zu können, ist die Kenntnis einer Lage bzw. Ausrichtung der Handwerkzeugmaschine 1 im freien Raum erforderlich.

Im Ruhezustand der Handwerkzeugmaschine 1 erfolgt die Bestimmung der Ausrichtung der Handwerkzeugmaschine 1 im freien Raum durch die von der Sensoreinrichtung 6 erfassten Linearbeschleunigungswerte $a_x$, $a_y$, $a_z$ direkt. In diesem Fall ist der einzige von der Sensoreinrichtung 6 erfassbare Beschleunigungswert der der Erdbeschleunigungswert g. Dadurch, dass die Erdbeschleunigung im Wesentlichen auf den Erdmittelpunkt gerichtet ist, kann mit Hilfe der Steuerungsvorrichtung 5 die Ausrichtung bzw. Lage der Handwerkzeugmaschine 1 im freien Raum im Verhältnis zu der Richtung, in welche die Erdbeschleunigung wirkt, ermittelt werden.

Als Ruhezustand der Handwerkzeugmaschine 1 wird dabei beispielsweise ein Zustand definiert, in dem eine Summe der drei Linearbeschleunigungswerte $a_x$, $a_y$, $a_z$ innerhalb eines definierten Bereiches von beispielsweise 8 m/s$^2$ bis 12 m/s$^2$ liegt. Um eine Rechenleistung zu reduzieren, kann alternativ hierzu ein Skalarprodukt der Linearbeschleunigungswerte $a_x$, $a_y$, $a_z$ mit einem entsprechend angepassten Bereich verwendet werden.

Alternativ oder insbesondere zusätzlich hierzu kann ein Ruhezustand der Handwerkzeugmaschine 1 anhand von von der Sensoreinrichtung 6 ermittelten Drehratenwerten $\omega_x$, $\omega_y$ und $\omega_z$ ermittelt werden, wobei ein Ruhezustand beispielsweise ermittelt wird, wenn ein Skalarprodukt der drei Drehratenwerte kleiner als ein definierter Grenzwert von

beispielsweise 4000 rad$^2$/s$^2$, insbesondere kleiner als etwa 2000 rad$^2$/s$^2$ ist.

Wenn kein Ruhezustand der Handwerkzeugmaschine 1 ermittelt wird, wird eine Lage der Handwerkzeugmaschine 1 anhand einer Addition von integrierten Drehratensignale $\omega_x$, $\omega_y$ und $\omega_z$ zu der Lage der Handwerkzeugmaschine 1 im zuletzt ermittelten Ruhezustand ermittelt. Eine derartige Lageermittlung der Handwerkzeugmaschine 1 wird solange fortgesetzt bis wiederum ein Ruhezustand der Handwerkzeugmaschine 1 ermittelt wird. Dann wird die Lage der Handwerkzeugmaschine 1 erneut anhand der Linearbeschleunigungswerte $a_x$, $a_y$, $a_z$ ermittelt.

Im nächsten Schritt werden der vierte, fünfte und sechste korrigierte Beschleunigungswert $a_{xkorr}$, $a_{ykorr}$, $a_{zkorr}$ zu einem ersten, zweiten und dritten Geschwindigkeitswert bzw. Lineargeschwindigkeitswert integriert.

Nachfolgend werden der erste, zweite und dritte Geschwindigkeitswert integriert und ein erster, zweiter und dritter Distanzwert ermittelt.

Insbesondere parallel hierzu werden der erste, zweite und dritte Geschwindigkeitswert mit einer Zeitkonstanten $\tau$ multipliziert und ein vierter, fünfter und sechster Distanzwert ermittelt. Bei der Zeitkonstanten kann es sich um eine festgelegte Zeitdauer zwischen 10 ms und 100 ms, insbesondere von etwa 70 ms, handeln.

Schließlich werden der erste, zweite, dritte, vierte, fünfte und sechste Distanzwertes addiert zum Ermitteln eines Gesamtdistanzwertes.

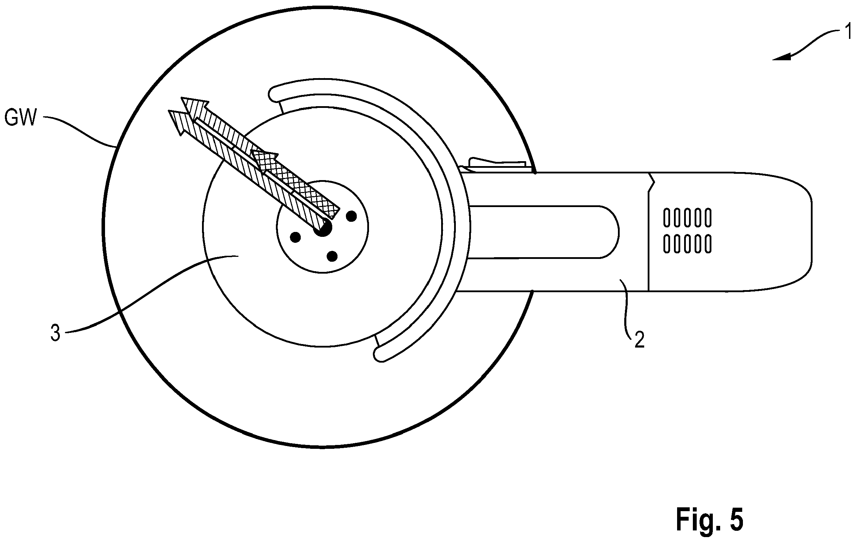

Mit Hilfe der Steuerungsvorrichtung 5 wird eine vordefinierte Aktion eingeleitet, wenn der Gesamtdistanzwert einen vorbestimmten Grenzwert GW übersteigt. Dies ist vereinfacht in Fig. 5 gezeigt, in der schematisch der vordefinierte Grenzwert GW in einer Achse in Form eines Kreises um die Antriebsachse des Werkzeugs 3 gezeigt ist, wobei die vordefinierte Aktion eingeleitet wird, wenn die von der Steuerungsvorrichtung 6 zu einem definierten Zeitpunkt prognostizierte Position des Referenzpunktes P außerhalb des Kreises GW liegt. Bei einer Betrachtung aller drei Raumachsen x, y und z könnte der vordefinierte Grenzwert GW beispielsweise eine Kugel repräsentieren. Es kann vorgesehen sein, dass die Grenzwerte in den drei Raumachsen x, y und z sich voneinander unterscheiden.

Für den Fall des Überschreitens des vordefinierten Grenzwertes GW wird der Antrieb der Handwerkzeugmaschine 1 von der Steuerungsvorrichtung 5 insbesondere durch das Aussenden eines entsprechenden Signals an den Antrieb abgebremst. Durch das Bremsen des Antriebs wird verhindert, dass das hier rotierende Werkzeug 3 einen Anwender der Handwerkzeugmaschine 1 verletzen kann.

Bei einer Ausführung, bei der die Sensoreinrichtung 6 beabstandet zu dem Referenzpunkt P angeordnet ist, werden zusätzlich zu dem oben beschriebenen Verfahren auch die Drehratenwerte bzw. -signale $\omega_x$, $\omega_y$ und $\omega_z$ verwendet, um auch eine Auswirkung einer möglichen Rotation der Handwerkzeugmaschine 1 auf den Referenzpunkt P mit einzubeziehen.

Die Drehratenwerte $\omega_x$, $\omega_y$ und $\omega_z$ werden durch die Sensoreinrichtung 6 erfasst. Bei dem ersten Drehratenwert $\omega_x$ handelt es sich um die Drehgeschwindigkeit, mit der sich die Handwerkzeugmaschine 1 um die Drehachse x in Drehrichtung a dreht. Bei dem zweiten Drehratenwert $\omega_y$ handelt es sich um die Drehgeschwindigkeit, mit der sich die Handwerkzeugmaschine 1 um die Drehachse y in Drehrichtung b dreht. Bei dem dritten Drehratenwert $\omega_z$ handelt es sich um die Drehgeschwindigkeit, mit der sich die Handwerkzeugmaschine 1 um die Drehachse z in Drehrichtung c dreht. Es ist dabei natürlich auch möglich, dass sich die Handwerkzeugmaschine 1 gegen die Drehrichtung a, b oder c drehen kann.

Im vorliegenden Fall liegt der Referenzpunkt P im Mittelpunkt der Trennscheibe 3 und somit in der Sensorachse x, so dass für die Berechnung der jeweiligen Distanzwerte $s_x$, $s_y$ und $s_z$ die Drehratenwerte $\omega_x$ nicht zu berücksichtigen sind. Die Position des Referenzpunktes P wird über eine doppelte Integration der Beschleunigungen aufsummiert mit einer Integration der Drehraten mulitpliziert mit dem Abstand D bzw. $r_D$ der Sensoreinrichtung 6 von dem Referenzpunkt P ermittelt. Somit können die jeweiligen Distanzwerte $s_x$, $s_y$ und $s_z$ gemäß dem Ausführungsbeispiel in Fig. 4 wie folgt berechnet werden:

$$s_z = \int \left( r_D \cdot \omega_{ySensor} + \int a_{zSensor}\, dt \right) dt$$

$$s_y = \int \left( r_D \cdot \omega_{zSensor} + \int a_{ySensor}\, dt \right) dt$$

$$s_x = \iint a_{xSensor}\, dt$$

Sollte die Sensoreinrichtung 6 nicht in der Sensorachse x liegen, sind die jeweiligen Drehratenwerte $\omega_x$ bei der Ermittlung der Distanzwerte $s_x$, $s_y$ und $s_z$ ebenfalls zu berücksichtigen, wie im Folgenden exemplarisch für den Distanzwert $s_z$ gezeigt ist:

$$s_z = \int \left( r_D \cdot \omega_{ySensor} + r_{D2} \cdot \omega_{xSensor} \int a_{zSensor}\, dt \right) dt$$

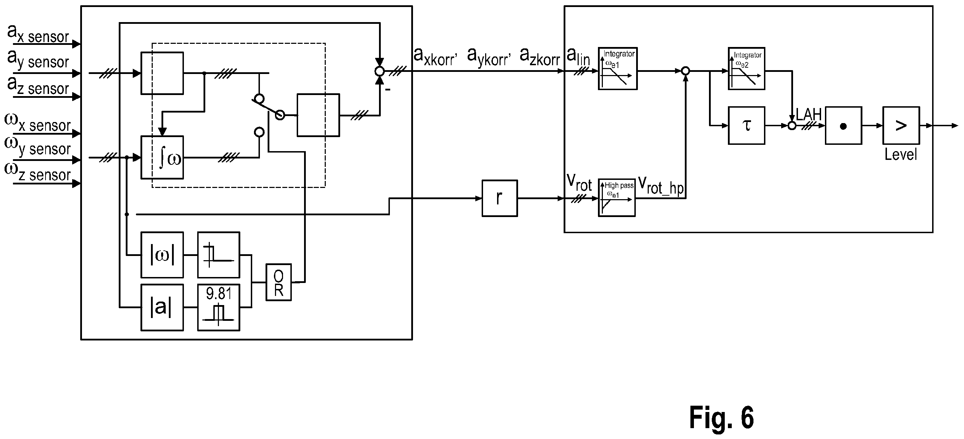

Der erste, zweite und dritte Drehratenwert $\omega_x$, $\omega_y$ und $\omega_z$ wird gemäß des in Fig. 6 gezeigten Schemas mit dem jeweils relevanten Abstandswert D bzw. $r_D$ zum Ermitteln eines weiteren Geschwindigkeitswertes in Form eines vierten, fünften und sechsten Geschwindigkeitswertes multipliziert. Wie vorstehend bereits erwähnt, entspricht der jeweilige Distanzwert D bzw. $r_D$ einem Abstand zwischen der Sensoreinrichtung 6 und dem Referenzpunkt P in der jeweiligen Raumrichtung x, y oder z.

In einem darauffolgenden Schritt werden gemäß dem in Fig. 6 gezeigten Schema die aus den Drehratenwerten $\omega_x$, $\omega_y$ und $\omega_z$ ermittelten weiteren Geschwindigkeitswerte mit den aus den Beschleunigungswerten ermittelten Geschwindigkeitswerten zu jeweiligen Gesamtgeschwindigkeitswerten addiert und diese wie oben näher beschrieben zur Ermittlung der Distanzwerte verwendet, um ein Überschreiten des Grenzwertes feststellen zu können.

Um die Position der Handwerkzeugmaschine 1 um die Zeit $\tau$ voraus zu berechnen, werden für die einzelnen Richtungen beispielsweise insgesamt folgende Rechnungen durchgeführt:

$$s_z = \int \left( r_D \cdot \omega_{ySensor} + \int a_{zSensor}\, dt \right) dt + \tau \left( r_D \cdot \omega_{ySensor} + \int a_{zSensor}\, dt \right)$$

$$s_y = \int \left( r_D \cdot \omega_{zSensor} + \int a_{ySensor}\, dt \right) dt + \tau \left( r_D \cdot \omega_{zSensor} + \int a_{ySensor}\, dt \right)$$

$$s_x = \iint a_{xSensor}\, dt + \tau \cdot \int a_{xSensor}\, dt$$

In einem weiteren Schritt, wird aus den ermittelten Koordinaten ein Gesamtdistanzwert ermittelt und dieser mit dem definierten Grenzwert GW verglichen. Wenn der Gesamtdistanzwert größer als der definierte Grenzwert GW ist und der Referenzpunkt P sich zu dem aktuellen Zeitpunkt addiert mit der Zeitkonstanten $\tau$ außerhalb des definierten Grenzwertes GW befinden würde, wird vorliegend der Antrieb aktiv abgebremst. Ansonsten läuft der Betrieb unverändert weiter.

Im Betrieb der Handwerkzeugmaschine 1, d. h., beispielsweise beim Schleifen, Trennen, Sägen, Bohren oder dergleichen können Störeinflüsse, wie beispielsweise starke Vibrationen auftreten, welche zu einem unerwünschten Abschalten der Handwerkzeugmaschine 1 führen können. Um dies auf einfache Weise vermeiden zu können die gemessenen Beschleunigungswerte werden gefiltert werden. Beispielsweise kann ein Tiefpassfilter vorgesehen sein, wobei typischen Frequenzen für die Tiefpassfilterung zwischen 0,1 Hz und 6 Hz, insbesondere bei etwa 1 Hz liegen. Bei Handwerkzeugmaschinen 1, die insbesondere oszillierend bewegte Werkzeuge 3, wie beispielsweise Sägen aufweisen, können Störsignale einen Einfluss auf die Drehratenwerte haben, wobei diese mit einem Tiefpass- oder Bandpassfilter weggefiltert werden können. Die Frequenz dieser Filter ist an die Frequenz der oszillierenden Bewegung angepasst, so dass diese in gewünschtem Umfang gedämpft werden.

Allgemein kann wenigstens ein Drehratenwert $\omega_x$, $\omega_y$ und $\omega_z$ und/oder wenigstens ein Linearbeschleunigungswert $a_x$, $a_y$, $a_z$, $a_{xkorr}$, $a_{ykorr}$, $a_{zkorr}$ zum Blockieren von Frequenzwerten, die unterhalb eines vorbestimmten Frequenzschwellwertes und/oder oberhalb eines weiteren Frequenzschwellwertes liegen, gefiltert werden. Hierdurch können beispielsweise auch kleinere Bewegungen der handgeführten Werkzeugmaschine, die kein festsitzendes Werkzeug als Ursache haben, für das Verfahren ignoriert werden.

Bei dem Filter kann es sich um einen Hochpassfilter, einen Tiefpassfilter oder einen bandbegrenzten Filter handeln. Als vorteilhaft hat es sich gezeigt, wenn ein bandbegrenzter Filter sowohl für die Beschleunigungswerte $a_x$, $a_y$, $a_z$ als auch für die Geschwindigkeitswerte eingesetzt wird, wobei die Grenzfrequenzen vorzugsweise jeweils etwa 0,5 Hz und 10 Hz, insbesondere etwa 2,8 Hz betragen. Das Filtern der Werte kann dabei jeweils vor oder nach einer Zusammenführung der aus den Linearbeschleunigungswerten $a_x$, $a_y$, $a_z$ generierten Geschwindigkeitswerte mit den aus den Drehratenwerten $\omega_x$, $\omega_y$ und $\omega_z$ errechneten Geschwindigkeitswerten vorgenommen werden. Besonders gute Ergebnisse sind erzielbar, wenn ein bandbegrenzter Filter für die Linearbe-schleunigungswerte $a_x$, $a_y$, $a_z$ und ein Hochpassfilter für die Drehratenwerte $\omega_x$, $\omega_y$ und $\omega_z$ oder ein bandbegrenzter Filter der Geschwindigkeitswerte vor oder nach einer Zusammenführung der Signale verwendet wird.

**Patentansprüche**

1. Verfahren zum Betreiben einer handgeführten Werkzeugmaschine (1), die mit einem Werkzeug (3) verbindbar ist, wobei ein Antrieb zum Antreiben des Werkzeugs (3), eine Steuerungsvorrichtung (5) und wenigstens eine Sensoreinrichtung (6) vorgesehen sind, wobei die Sensoreinrichtung (6) zum Erfassen wenigstens eines Linearbeschleunigungswertes ($a_x$, $a_y$, $a_z$) und insbesondere wenigstens eines Drehratenwertes ($\omega_x$, $\omega_y$, $\omega_z$) ausgeführt ist, wobei die wenigstens eine Sensoreinrichtung (6) einen Abstand (D bzw. $r_D$) zu einem der Werkzeugmaschine (1) oder dem Werkzeug (3) zugeordneten Referenzpunkt (P) größer oder gleich Null aufweist, wobei das Verfahren die folgenden Schritte aufweist:

   - Erfassen wenigstens eines Linearbeschleunigungswertes ($a_x$, $a_y$, $a_z$) durch die wenigstens eine Sensoreinrichtung (6);
   - Subtrahieren der Erdbeschleunigung von dem wenigstens einen Linearbeschleunigungswert ($a_x$, $a_y$, $a_z$) zu wenigstens einem bereinigten Linearbeschleunigungswert ($a_{xkorr}$, $a_{ykorr}$, $a_{zkorr}$);
   - Integrieren des wenigstens einen bereinigten Linearbeschleunigungswertes ($a_{xkorr}$, $a_{ykorr}$, $a_{zkorr}$) zu wenigstens einem Geschwindigkeitswert;
   - Integrieren des wenigstens einen Geschwindigkeitswerts zu wenigstens einem Distanzwert ($s_x$, $s_y$, $s_z$);
   - Multiplizieren des wenigstens einen Geschwindigkeitswertes mit einer Zeitkonstanten ($\tau$) zu wenigstens einem weiteren Distanzwert;
   - Addieren des wenigstens einen Distanzwerts mit dem wenigstens einen weiteren Distanzwert zu wenigstens einem Gesamtdistanzwert ($s_x$, $s_y$, $s_z$);
   - Filtern wenigstens eines der Linearbeschleunigungswerte ($a_x$, $a_y$, $a_z$, $a_{xkorr}$, $a_{ykorr}$, $a_{zkorr}$) und/oder wenigstens eines der Geschwindigkeitswerte;
   - Vergleichen des wenigstens einen Gesamtdistanzwertes ($s_x$, $s_y$, $s_z$) mit einem vordefinierten Grenzwert; und
   - Einleiten einer vordefinierten Aktion, wenn der wenigstens eine Gesamtdistanzwert den definierte Grenzwert (GW) übersteigt.

2. Verfahren nach Anspruch 1, **gekennzeichnet durch**:

   Ermitteln wenigstens eines Drehratenwertes ($\omega_x$, $\omega_y$, $\omega_z$) von wenigstens einer Sensoreinrichtung (6), wobei der Drehratenwert ($\omega_x$, $\omega_y$, $\omega_z$) mit einem Wert (D bzw. $r_D$) multipliziert wird, der dem Abstand der Sensoreinrichtung (6) von dem Referenzpunkt (P) entspricht, wobei der ermittelte Wert zur Ermittlung des Gesamtdistanzwertes ($s_x$, $s_y$, $s_z$) verwendet wird.

3. Verfahren nach einem der Ansprüche 1 oder 2, **dadurch gekennzeichnet, dass** die Sensoreinrichtung (6) Linearbeschleunigungswerte ($a_x$, $a_y$, $a_z$) und/oder Drehratenwerte ($\omega_x$, $\omega_y$, $\omega_z$) in wenigstens zwei, insbesondere drei Raumrichtungen (x-Achse, y-Achse, z-Achse) ermittelt.

4. Verfahren nach einem der Ansprüche 1 bis 3, **dadurch gekennzeichnet, dass** ein Ruhezustand der Werkzeugmaschine (1) im Raum ermittelt wird, wenn eine Vektorsumme der drei Linearbeschleunigungswerte ($a_x$, $a_y$, $a_z$) innerhalb eines definierten Bereiches von beispielsweise 8 m/s$^2$ bis 12 m/s$^2$ liegt.

5. Verfahren nach einem der Ansprüche 1 bis 4, **dadurch gekennzeichnet, dass** ein Ruhezustand der Werkzeugmaschine (1) anhand der drei Drehratenwerte ($\omega_x$, $\omega_y$, $\omega_z$) ermittelt wird, wobei ein Ruhezustand beispielsweise ermittelt wird, wenn ein Skalarprodukt der drei Drehratenwerte ($\omega_x$, $\omega_y$, $\omega_z$) kleiner als ein definierter Grenzwert von beispielsweise 4000 rad$^2$/s$^2$, insbesondere kleiner als etwa 2000 rad$^2$/s$^2$ ist.

6. Verfahren nach einem der Ansprüche 1 bis 5, **dadurch gekennzeichnet, dass** eine Lage der Werkzeugmaschine (1) bei in Bewegung befindlicher Werkzeugmaschine (1) anhand einer Addition von integrierten Drehratensignalen zu der Position der Werkzeugmaschine (1) in dem Ruhezustand ermittelt wird.

7. Verfahren nach einem der Ansprüche 1 bis 6, **dadurch gekennzeichnet, dass** die Zeitkonstante ($\tau$) einen Wert zwischen 5 und 150 ms, insbesondere von etwa 70 ms aufweist.

8. Verfahren nach einem der Ansprüche 1 bis 7, **gekennzeichnet durch** das Filtern wenigstens eines Drehratenwertes ($\omega_x$, $\omega_y$, $\omega_z$) und/oder Linearbeschleunigungswertes ($a_x$, $a_y$, $a_z$, $a_{xkorr}$, $a_{ykorr}$, $a_{zkorr}$) zum Blockieren von Frequenzwerten, die unterhalb eines vorbestimmten Frequenzschwellwertes und/oder oberhalb eines weiteren Frequenzschwellwertes liegen.

9. Verfahren nach einem der Ansprüche 1 bis 8, **dadurch gekennzeichnet, dass** die vordefinierte Aktion einem Abschalten und/oder aktivem Abbremsen des Antriebs, dem Aussenden eines Warnsignals und/oder der Ausgabe eines Signals auf einer Anzeigeeinrichtung entspricht.

10. Handwerkzeugmaschine (1), die mit einem Werkzeug (3) verbindbar ist, wobei ein Antrieb zum Antreiben des Werkzeugs (3), eine Steuerungsvorrichtung (5) und wenigstens eine Sensoreinrichtung (6) vorgesehen sind, wobei die Sensoreinrichtung (6) zum Erfassen wenigstens eines Linearbeschleunigungswertes ($a_x$, $a_y$, $a_z$) und insbesondere wenigstens eines Drehratenwertes ($w_x$, $\omega_y$, $\omega_z$) ausgeführt ist, wobei die wenigstens eine Sensoreinrichtung (6) einen Abstand (D bzw. $r_D$) zu einem der Werkzeugmaschine (1) oder dem Werkzeug (3) zugeordneten Referenzpunkt (P) größer oder gleich Null aufweist, und wobei die Handwerkzeugmaschine (1) zur Durchführung des Verfahrens nach einem der Ansprüche 1 bis 9 ausgeführt ist.

11. Handwerkzeugmaschine nach Anspruch 10, **dadurch gekennzeichnet, dass** wenigstens eine Filtereinrichtung zum Blockieren von Frequenzwerten, die unterhalb eines vorbestimmten Frequenzschwellwertes liegen, und/oder wenigstens eine Filtereinrichtung zum Blockieren von Frequenzwerten, die oberhalb eines vorbestimmten Frequenzschwellwertes liegen, vorgesehen ist.

12. Handwerkzeugmaschine nach einem der Ansprüche 10 oder 11, **dadurch gekennzeichnet, dass** die Sensoreinrichtung (6) einen Beschleunigungssensor und/oder einen Gyrosensor umfasst.

**Claims**

1. Method for operating a hand-held machine tool (1) which can be connected to a tool (3), wherein a drive for driving the tool (3), a control device (5) and at least one sensor apparatus (6) are provided, wherein the sensor apparatus (6) is designed to detect at least one linear acceleration value ($a_x$, $a_y$, $a_z$) and in particular at least one rotational rate value ($\omega_x$, $\omega_y$, $\omega_z$), wherein the at least one sensor apparatus (6) has a distance (D or $r_D$) from a reference point (P) associated with the machine tool (1) or the tool (3) that is greater than or equal to zero, wherein the method comprises the following steps:

   - detecting at least one linear acceleration value ($a_x$, $a_y$, $a_z$) by means of the at least one sensor apparatus (6);
   - subtracting the gravitational acceleration from the at least one linear acceleration value ($a_x$, $a_y$, $a_z$) to produce at least one adjusted linear acceleration value ($a_{xkorr}$, $a_{ykorr}$, $a_{zkorr}$);
   - integrating the at least one adjusted linear acceleration value ($a_{xkorr}$, $a_{ykorr}$, $a_{zkorr}$) to produce at least one speed value;
   - integrating the at least one speed value to produce at least one distance value ($s_x$, $s_y$, $s_z$);
   - multiplying the at least one speed value by a time constant ($\tau$) to produce at least one further distance value;
   - adding the at least one distance value to the at least one further distance value to produce at least one total distance value ($s_x$, $s_y$, $s_z$);
   - filtering at least one of the linear acceleration values ($a_x$, $a_y$, $a_z$, $a_{xkorr}$, $a_{ykorr}$, $a_{zkorr}$) and/or at least one of the speed values;
   - comparing the at least one total distance value ($s_x$, $s_y$, $s_z$) with a predefined limit value; and
   - initiating a predefined action when the at least one total distance value exceeds the defined limit value (GW).

2. Method according to claim 1, **characterized by**:
   determining at least one rotational rate value ($\omega_x$, $\omega_y$, $\omega_z$) from at least one sensor apparatus (6), the rotational rate value ($\omega_x$, $\omega_y$, $\omega_z$) being multiplied by a value (D or $r_D$) which corresponds to the distance of the sensor apparatus (6) from the reference point (P), the determined value being used to determine the total distance value ($s_x$, $s_y$, $s_z$).

3. Method according to either claim 1 or claim 2, **characterized in that** the sensor apparatus (6) determines linear acceleration values ($a_x$, $a_y$, $a_z$) and/or rotational rate values ($\omega_x$, $\omega_y$, $\omega_z$) in at least two, in particular three, spatial directions (x-axis, y-axis, z-axis).

4. Method according to any of claims 1 to 3, **characterized in that** an idle state of the machine tool (1) in space is determined when a vector sum of the three linear acceleration values ($a_x$, $a_y$, $a_z$) is within a defined range of from 8 m/s$^2$ to 12 m/s$^2$, for example.

5. Method according to any of claims 1 to 4, **characterized in that** an idle state of the machine tool (1) is determined on the basis of the three rotational rate values ($\omega_x$, $\omega_y$, $\omega_z$), an idle state being determined, for example, when a dot product of the three rotational rate values ($w_x$, $\omega_y$, $\omega_z$) is less than a defined limit value of 4000 rad$^2$/s$^2$, in particular less than approximately 2000 rad$^2$/s$^2$, for example.

6.  Method according to any of claims 1 to 5, **characterized in that** a position of the machine tool (1) when the machine tool (1) is in motion is determined on the basis of adding integrated rotational rate signals to the position of the machine tool (1) in the idle state.

7.  Method according to any of claims 1 to 6, **characterized in that** the time constant ($\tau$) has a value between 5 and 150 ms, in particular of approximately 70 ms.

8.  Method according to any of claims 1 to 7, **characterized by** filtering at least one rotational rate value ($\omega_x$, $\omega_y$, $\omega_z$) and/or linear acceleration value ($a_x$, $a_y$, $a_z$, $a_{xkorr}$, $a_{ykorr}$, $a_{zkorr}$) in order to block frequency values which are below a predetermined frequency threshold value and/or above a further frequency threshold value.

9.  Method according to any of claims 1 to 8, **characterized in that** the predefined action corresponds to switching off and/or actively braking the drive, sending out a warning signal and/or outputting a signal on a display apparatus.

10. Hand-held machine tool (1) which can be connected to a tool (3), wherein a drive for driving the tool (3), a control device (5) and at least one sensor apparatus (6) are provided, wherein the sensor apparatus (6) is designed to detect at least one linear acceleration value ($a_x$, $a_y$, $a_z$) and in particular at least one rotational rate value ($w_x$, $\omega_y$, $\omega_z$), wherein the at least one sensor apparatus (6) has a distance (D or $r_D$) from a reference point (P) associated with the machine tool (1) or the tool (3) that is greater than or equal to zero, and wherein the hand-held machine tool (1) is designed to carry out the method according to any of claims 1 to 9.

11. Hand-held machine tool according to claim 10, **characterized in that** at least one filter apparatus for blocking frequency values which are below a predetermined frequency threshold value and/or at least one filter apparatus for blocking frequency values which are above a predetermined frequency threshold value is provided.

12. Hand-held machine tool according to either claim 10 or claim 11, **characterized in that** the sensor apparatus (6) comprises an acceleration sensor and/or a gyro sensor.

**Revendications**

1.  Procédé permettant de faire fonctionner une machine-outil (1) à guidage manuel qui peut être reliée à un outil (3), un entraînement permettant d'entraîner l'outil (3), un dispositif de commande (5) et au moins un appareil formant capteur (6) étant prévus, l'appareil formant capteur (6) étant configuré pour la détection d'au moins une valeur d'accélération linéaire ($a_x$, $a_y$, $a_z$) et en particulier d'au moins une valeur de vitesse de rotation ($\omega_x$, $\omega_y$, $\omega_z$), l'au moins un appareil formant capteur (6) présentant une distance (D ou $r_D$) par rapport à un point de référence (P) associé à la machine-outil (1) ou à l'outil (3) qui est supérieure ou égale à zéro,
le procédé présentant les étapes suivantes :

    - détection d'au moins une valeur d'accélération linéaire ($a_x$, $a_y$, $a_z$) par le biais de l'au moins un appareil formant capteur (6) ;
    - soustraction de l'accélération gravitationnelle à l'au moins une valeur d'accélération linéaire ($a_x$, $a_y$, $a_z$) pour obtenir au moins une valeur d'accélération linéaire corrigée ($a_{xkorr}$, $a_{ykorr}$, $a_{zkorr}$) ;
    - intégration de l'au moins une valeur d'accélération linéaire corrigée ($a_{xkorr}$, $a_{ykorr}$, $a_{zkorr}$) pour obtenir au moins une valeur de vitesse ;
    - intégration de l'au moins une valeur de vitesse pour obtenir au moins une valeur de distance ($s_x$, $s_y$, $s_z$);
    - multiplication de l'au moins une valeur de vitesse par une constante de temps ($\tau$) pour obtenir au moins une autre valeur de distance ;
    - addition de l'au moins une valeur de distance à l'au moins une autre valeur de distance pour obtenir au moins une valeur de distance totale ($s_x$, $s_y$, $s_z$);
    - filtrage d'au moins l'une des valeurs d'accélération linéaire ($a_x$, $a_y$, $a_z$, $a_{xkorr}$, $a_{ykorr}$, $a_{zkorr}$) et/ou d'au moins l'une des valeurs de vitesse ;
    - comparaison de l'au moins une valeur de distance totale ($s_x$, $s_y$, $s_z$) avec une valeur limite prédéfinie ; et
    - lancement d'une action prédéfinie lorsque l'au moins une valeur de distance totale dépasse la valeur limite (GW) définie.

2. Procédé selon la revendication 1, **caractérisé par** :
la détermination d'au moins une valeur de vitesse de rotation ($\omega_x$, $\omega_y$, $\omega_z$) par le biais d'au moins un appareil formant capteur (6), la valeur de vitesse de rotation ($\omega_x$, $\omega_y$, $\omega_z$) étant multipliée par une valeur (D ou $r_D$) qui correspond à la distance de l'appareil formant capteur (6) par rapport au point de référence (P), la valeur déterminée étant utilisée pour la détermination de la valeur de distance totale ($s_x$, $s_y$, $s_z$).

3. Procédé selon l'une des revendications 1 ou 2, **caractérisé en ce que** l'appareil formant capteur (6) détermine des valeurs d'accélération linéaire ($a_x$, $a_y$, $a_z$) et/ou des valeurs de vitesse de rotation ($\omega_x$, $\omega_y$, $\omega_z$) dans au moins deux, en particulier trois, directions spatiales (axe x, axe y, axe z).

4. Procédé selon l'une des revendications 1 à 3, **caractérisé en ce qu'**un état de repos de la machine-outil (1) dans l'espace est déterminé lorsqu'une somme vectorielle des trois valeurs d'accélération linéaire ($a_x$, $a_y$, $a_z$) se situe à l'intérieur d'une plage définie de par exemple 8 m/s$^2$ à 12 m/s$^2$.

5. Procédé selon l'une des revendications 1 à 4, **caractérisé en ce qu'**un état de repos de la machine-outil (1) est déterminé sur la base des trois valeurs de vitesse de rotation ($\omega_x$, $\omega_y$, $\omega_z$), un état de repos étant par exemple déterminé lorsqu'un produit scalaire des trois valeurs de vitesse de rotation ($w_x$, $\omega_y$, $\omega_z$) est inférieur à une valeur limite définie de par exemple 4 000 rad$^2$/s$^2$, en particulier inférieur à environ 2 000 rad$^2$/s$^2$.

6. Procédé selon l'une des revendications 1 à 5, **caractérisé en ce qu'**une position de la machine-outil (1), lorsque la machine-outil (1) se trouve en mouvement, est déterminée sur la base d'une addition de signaux de vitesse de rotation intégrés à la position de la machine-outil (1) dans l'état de repos.

7. Procédé selon l'une des revendications 1 à 6, **caractérisé en ce que** la constante de temps ($\tau$) présente une valeur comprise entre 5 et 150 ms, en particulier d'environ 70 ms.

8. Procédé selon l'une des revendications 1 à 7, **caractérisé par** le filtrage d'au moins une valeur de vitesse de rotation ($\omega_x$, $\omega_y$, $\omega_z$) et/ou une valeur d'accélération linéaire ($a_x$, $a_y$, $a_z$, $a_{xkorr}$, $a_{ykorr}$, $a_{zkorr}$) pour le blocage de valeurs de fréquence qui se situent en dessous d'une valeur seuil de fréquence prédéterminée et/ou au-dessus d'une autre valeur seuil de fréquence.

9. Procédé selon l'une des revendications 1 à 8, **caractérisé en ce que** l'action prédéfinie correspond à un arrêt et/ou à un freinage actif de l'entraînement, à l'émission d'un signal d'avertissement et/ou à la sortie d'un signal sur un appareil d'affichage.

10. Machine-outil portative (1) qui peut être reliée à un outil (3), un entraînement permettant l'entraînement de l'outil (3), un dispositif de commande (5) et au moins un appareil formant capteur (6) étant prévus, l'appareil formant capteur (6) étant configuré pour la détection d'au moins une valeur d'accélération linéaire ($a_x$, $a_y$, $a_z$) et en particulier d'au moins une valeur de vitesse de rotation ($\omega_x$, $\omega_y$, $\omega_z$), l'au moins un appareil formant capteur (6) présentant une distance (D ou $r_D$) par rapport à un point de référence (P) associé à la machine-outil (1) ou à l'outil (3) qui est supérieure ou égale à zéro, et la machine-outil portative (1) étant configurée pour la mise en oeuvre du procédé selon l'une des revendications 1 à 9.

11. Machine-outil portative selon la revendication 10, **caractérisée en ce qu'**au moins un appareil de filtrage permettant de bloquer des valeurs de fréquence qui se situent en dessous d'une valeur seuil de fréquence prédéterminée et/ou au moins un appareil de filtrage permettant de bloquer des valeurs de fréquence qui se situent au-dessus d'une valeur seuil de fréquence prédéterminée sont prévus.

12. Machine-outil portative selon l'une des revendications 10 ou 11, **caractérisée en ce que** l'appareil formant capteur (6) comprend un capteur d'accélération et/ou un capteur gyroscopique.

**Fig. 1**

EP 4 031 331 B1

Fig. 2

Fig. 3

EP 4 031 331 B1

Fig. 4

Fig. 5

Fig. 6

**IN DER BESCHREIBUNG AUFGEFÜHRTE DOKUMENTE**

**In der Beschreibung aufgeführte Patentdokumente**

- EP 0771619 A2
- DE 4344817 A1